# EUROPEAN PATENT APPLICATION

(11) **EP 1 816 769 A2**
(43) Date of publication of application: **08.08.2007**
(21) Application number: 07002413.8
(22) Date of filing: 05.02.2007
(51) Int. Cl.: H04H 1/00

(54) **Apparatus and method for receiving data in a mobile broadcasting terminal**

(30) Priority: 03.02.2006 KR 20060010576
(71) Applicant: Samsung Electronics Co., Ltd., Suwon-si, Gyeonggi-Do (KR)
(72) Inventor: Roh, Hee-Jin Samsung Electronics Co., Ltd., Suwon-si Gyeonggi-do (KR); Kim, Min-Goo Samsung Electronics Co., Ltd., Suwon-si Gyeonggi-do (KR); Lee, Sang-Jin Samsung Electronics Co., Ltd., Suwon-si Gyeonggi-do (KR)
(74) Representative: Lang, Johannes

(57) **Abstract**

An apparatus for receiving and processing a broadcast signal in a mobile broadcasting terminal is provided. A preprocessor receives a broadcast signal, converts the broadcast signal into a baseband signal, and then performs OFDM demodulation, Viterbi decoding, and convolutional deinterleaving thereon. A first Reed-Solomon (RS) decoder RS-decodes the signal output from the preprocessor, and outputs a Transport Stream (TS) packet. A checker checks Cyclic Redundancy Check (CRC) of the TS packet. A datagram extractor extracts a datagram having a good CRC result. A datagram controller receives the datagram having a good CRC result and outputs the received datagram to an application controller. The application controller decodes the broadcast data using the datagram received from the datagram controller and provides the decoded broadcast data to a user.

## Description

### BACKGROUND OF THE INVENTION

### 1. Field of the Invention

The present invention relates generally to an apparatus and method for receiving data in a wireless communication system, and in particular, to an apparatus and method for receiving data in a mobile broadcasting terminal.

### 2. Description of the Related Art

Today's wireless communication systems have typically been developed to transmit and receive data over the air. With the progress of these wireless communication systems, there is now a discussion regarding wireless broadcast services that support both portability and mobility. Such wireless broadcast systems would basically provide unidirectional services, although bidirectional services are also now under discussion.

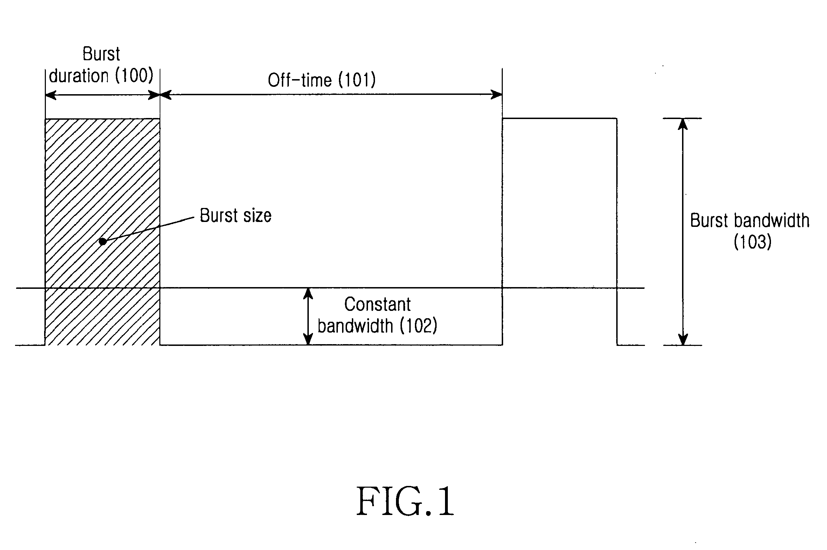

A Digital Video Broadcasting - Handheld (DVB-H) system is one of the typical wireless broadcast systems. The DVB-H system, which is currently being developed to take the portability and mobility into consideration, is an European digital TV mobile broadcast standard improved from a Digital Video Broadcasting - Terrestrial (DVB-T) system. However, in order to increase the portability of the terminal receiving the broadcast service, it is necessary to reduce battery consumption at a receiver. As a result, the DVB-H system utilizes a time slicing technique, as illustrated in FIG. 1.

FIG. 1 is a conceptual diagram illustrating a time slicing technique used in a conventional communication system.
The time slicing technique, as shown in FIG. 1, instantaneously transmits data at a high data rate for a short time and transmits no data for the other time, instead of continuously transmitting data for a give time. Here, a particular time for which data is transmitted is called a burst duration 100, and the time for which no burst is transmitted is called an off-time 101. The off-time 101 is defined as such for a particular service only. Actually, however, bursts for several other services can be transmitted in the off-time 101. Therefore, in the time slicing technique, data of several different services is transmitted for an inter-burst interval after undergoing Time Division Multiplexing (TDM), by way of sharing the same frequency band in units of bursts. Hence, with use of the time slicing technique, the DVB-H system can transmit a plurality of services in one band, and can provide a data rate of 8 ~ 31 Mbps per frequency band.

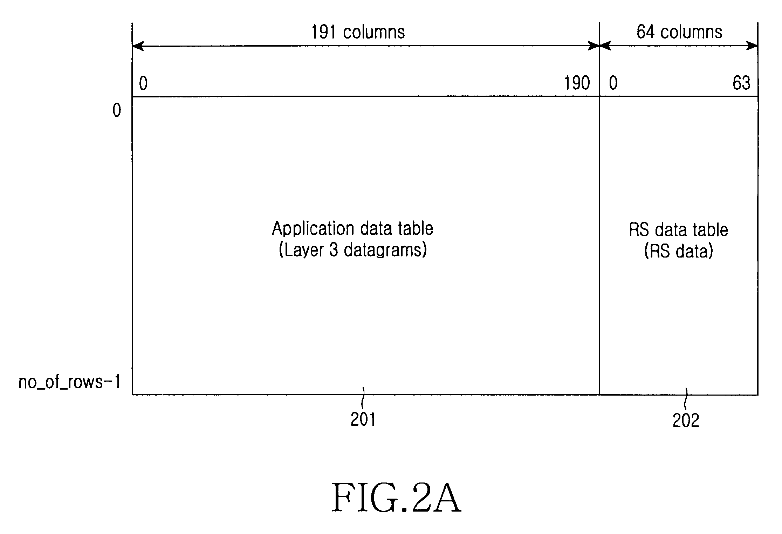

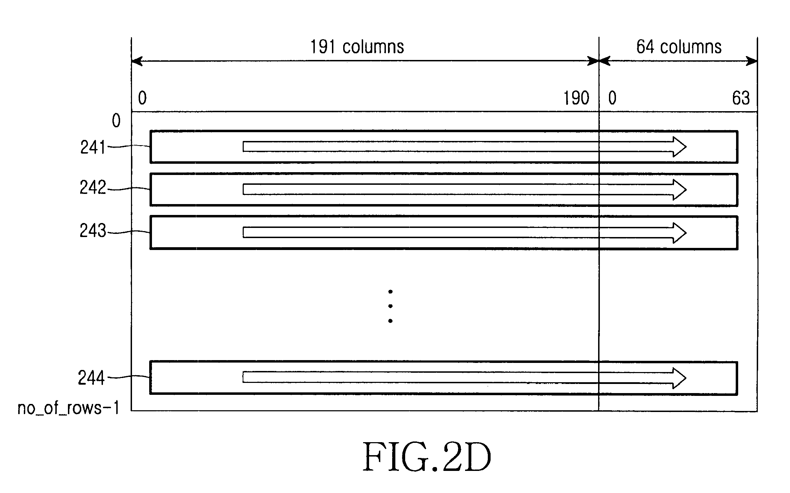

To increase the mobility, the DVB-H system additionally introduces an error correction technique to a Multi-Protocol Encapsulation (MPE) layer, which is a link layer of the DVB-T system, thereby improving the capability of controlling errors even in the channel environment where fading is considerable. The added error correction technique uses a Reed-Solomon (RS) code, and with use of it, performs Forward Error Correction (FEC). This is called MPE-FEC and is a conventional method for transmitting data using the MPE-FEC technique. In operation the MPE-FEC technique generates parity bits by performing RS coding on an Internet Protocol (IP) datagram received from an upper layer, and configures an MPE-FEC frame with them, as illustrated in FIGs. 2A to 2C.

FIGs. 2A to 2C are conceptual diagrams for a description of an MPE-FEC frame structure and a method for configuring an MPE-FEC frame.

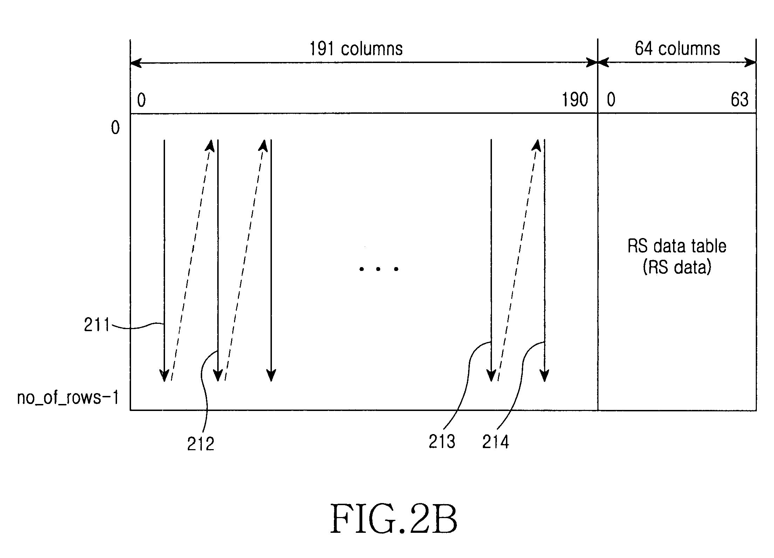

In FIG. 2A, an MPE-FEC frame is comprised of an application data table 201 for storing IP datagrams and an RS data table 202 for storing parity bits. Here, a RS coding method used for this performs a byte coding process with RS (255, 191, 64). FIG. 2B illustratesan order of arranging IP datagrams. In a process of arranging the IP datagrams in the application data table, data is first arranged in a direction denoted by reference numeral 211. Thereafter, the next column is selected, and data is then arranged therein as shown by reference numeral 212. This is continuously repeated up to the last position of the application data table.For example, data is continuously stored as shown by reference numerals 213 and 214. In sum, the IP datagrams are stored in the application data table in the up-to-down direction and the left-to-right direction.

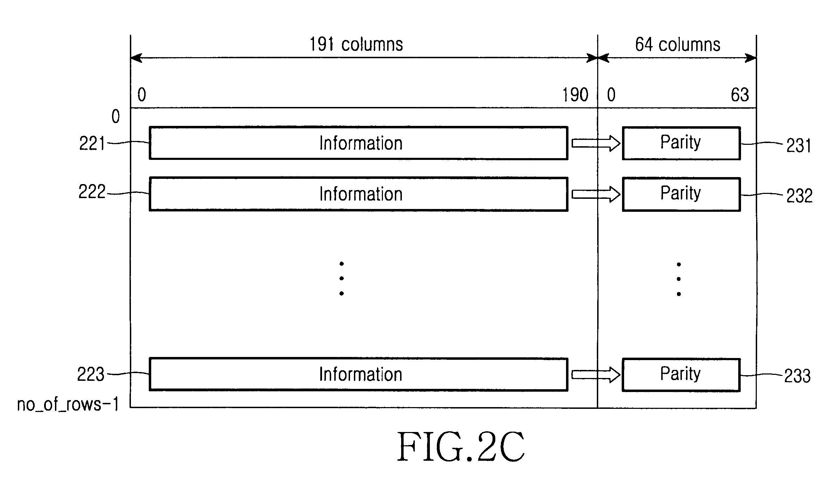

Next, FIG. 2C shows a process of acquiring parities. After the data is stored, as described in FIG. 2B, parities are filled in the RS data table using the data written in each row.For example, parities are acquired using the data corresponding to a first row 221, and the acquired parities are then stored as shown by reference numeral 231. Similarly, parities are acquired using the data in the next row 222, and the acquired parities are stored as shown by reference numeral 232. This is repeated until parities are acquired using the data in the last row 223 stored in the application data table 201, and the acquired parities are stored in the RS data table 202 as shown by reference numeral 233.

Consequently, a MPE-FEC frame is configured as shown in FIG. 2A. FIG 2B, however, shows a method for transmitting the configured MPE-FEC frame.

In a process of transmitting an MPE-FEC frame, the application data table 201 is first transmitted and then, the RS data table 202 is transmitted. In a process of transmitting data stored in each table, data is transmitted in units of columns in the up-to-down direction and the left-to-right direction.Here, the data is transmitted in the same direction as that in which IP datagrams are stored in FIG. 2B. Thus, by transmitting data in this manner, it is possible to obtain a virtual interleaving effect.

In addition, an IP datagram includes a header with its address, and a Cyclic Redundancy Check (CRC) for error correction, thereby forming a section. In order to transmit the data according to a Moving Picture Expert Group (MPEG) Transport Stream (TS) format, a physical layer divides the sections into packets, and performs FEC coding and Orthogonal Frequency Division Multiplexing (OFDM) modulation thereon before transmission.

A receiver performs a reverse process of the transmission process. In the receiver, after a physical layer performs Viterbi decoding and RS (204, 188, 8) decoding, a link layer detects an IP datagram by moving a header and CRC of an MPE-FEC section. Thereafter, the receiver stores the received data in the application data table and the RS data table of an MPE-FEC memory, and then performs MPE-FEC decoding thereon.

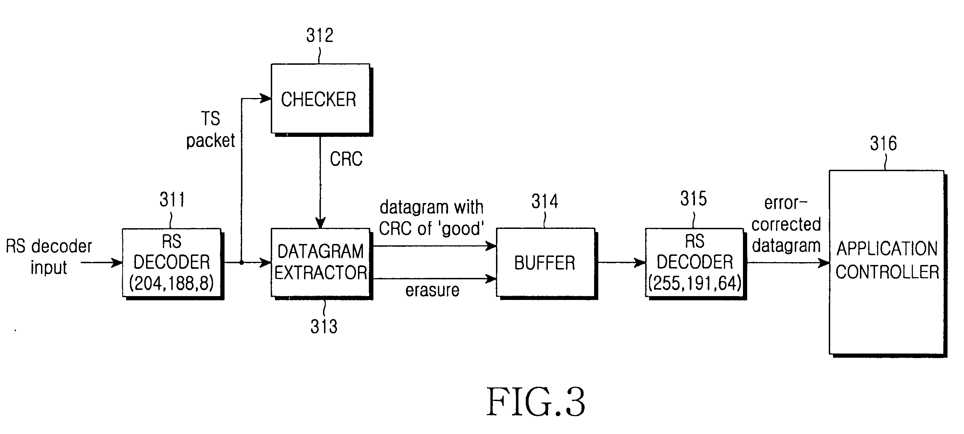

FIG. 3 is a functional schematic diagram for MPE-FEC processing in a mobile broadcasting receiver based on the DVB-H standard.

A signal received at the receiver is thereafter converted into a baseband signal, and then sequentially undergoes OFDM demodulation, Viterbi decoding, convolutional deinterleaving, and RS decoding. The process of OFDM demodulation, Viterbi decoding, and convolutional deinterleaving is generally called a "preprocessing process." An RS decoder 311 performs RS (204, 188, 8) decoding and outputs decoded data. An output of the RS decoder 311 has a format of an MPEG TS packet, and several TS packets constitute one MPE-FEC section. The MPE-FEC section is detected by a checker 312 and information on an error CRC-checked by the checker 312 is provided to a datagram extractor 313. Then the datagram extractor 313 extracts an IP datagram in the section determined by the checker 312 that there is no error, and stores the extracted IP datagram in a buffer 314. However, the section determined to have a CRC error undergoes error or erasure processing in the buffer 314, and then is error-corrected by an MPE-FEC RS decoder 315. Thereafter, the error-corrected IP datagram is delivered to an application controller (or application processor) 316 as a baseband channel chip output. Then the application controller 316 performs audio/video decoding thereon.

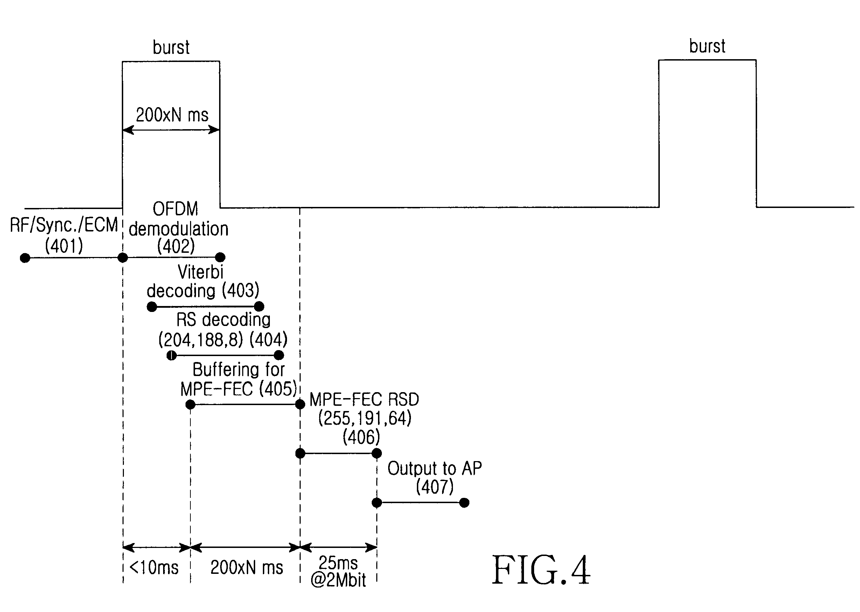

FIG. 4 is a timing diagram for data processing at a mobile broadcasting receiver supporting N parallel services in a DVB-H system. With reference to FIG. 4, a description will now be made of the data processing timing.

To receive one burst, the receiver converts a Radio Frequency (RF) signal into a baseband signal, and performs an OFDM synchronization process thereon before the burst. In a DVB-H system supporting Conditional Access (CA), the receiver should receive an Entitlement Control Message (ECM) before the burst. Therefore, at a time 401, the receiver receives an RF signal, performs an OFDM synchronization process thereon, and receives and decodes an ECM for Conditional Access.

The receiver receives data transmitted in the burst and performs OFDM modulation thereon in duration 402, performs Viterbi decoding in duration 403, and performs RS decoding in duration 404. The time required for this is approximately 10 ms. Thereafter, about a 1-burst time is required for detecting a section and storing the MPE-FEC data for MPE-FEC demodulation, and is shown as duration 405. FIG. 4 shows a processing time at a DVB-H receiver, and parameters used therein are set such that a burst bandwidth 103 is 10 Mbps, a constant bandwidth 102 is 500 kbps, and a burst size is 2 M bits, so 1-burst duration 100 is assumed to be 200 ms. If the number of parallel services is N, the burst duration increases N times. Here, a demodulation time of the MPE-FEC is assumed to be 25 ms like duration 406, an approximately (200 x N + 35)-ms time is required until before transmission of an error-corrected IP datagram to an Application Processor (AP) chip, i.e. before start of duration 407.

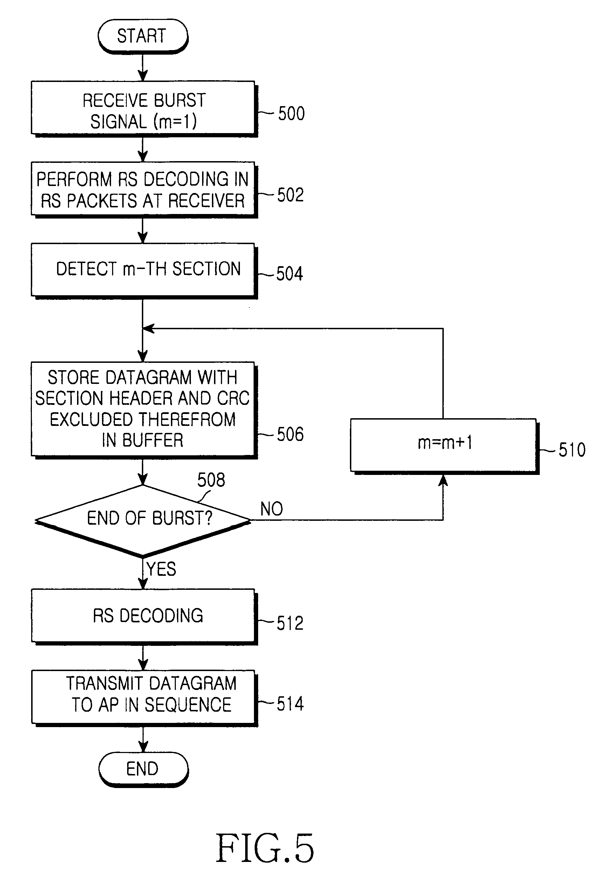

FIG. 5 is a flow diagram illustrating a general process of receiving a burst signal and performing MPE-FEC processing thereon in a mobile broadcasting receiver.

An RF unit (not shown) of the receiver receives a burst signal in step 500, wherein m is set to 1 (m=1). Thereafter, an RS decoder 311 of the receiver performs RS decoding in units of TS packets in step 502. A checker 312 of the receiver detects a m^{th} section in step 504. After detecting the m^{th} section, a datagram extractor 313 of the receiver stores a datagram with a section header and CRC excluded therefrom in a buffer 314 in step 506. The datagram extractor 313 of the receiver determines in step 508 whether the stored datagram is at the end of the burst. For example, the datagram extractor 313 determines if burst transmission duration ends according to the time slicing technique as described in FIG. 1. If it is determined that the stored datagram is not at the end of the burst, the datagram extractor 313 increases the value m by 1 in step 510 and then proceeds to step 506 to repeat the above process. However, if the stored datagram is at the end of the burst, the receiver performs RS decoding using its RS decoder 315 in step 512. After completion of RS decoding, the RS decoder 315 of the receiver sequentially transmits datagrams to the Application Processor (AP) in step 514.

Taking into account that the total processing time required in the baseband application controller 316 is approximately "200 x N + 35" ms, as described above, it can be understood that the time required for storing in the buffer 314, which is an MPE-FEC memory, is much greater than the other processing time in the DVB-H receiver. In particular, as the burst size increases or the number of parallel services increases, the processing time required for storing in the MPE-FEC memory increases proportionally. The increase in the processing time in the receiver causes an increase in the time required for channel switching of a mobile broadcast, inconveniencing the user.

### SUMMARY OF THE INVENTION

An aspect of the present invention is to address at least the problems and/or disadvantages and to provide at least the advantages described below. Accordingly, one aspect of the present invention is to provide a data reception apparatus and method capable of reducing a reception time in a mobile broadcasting terminal.

Another aspect of the present invention is to provide a data reception apparatus and method capable of reducing power consumption in a mobile broadcasting terminal.

Another aspect of the present invention is to provide a data reception apparatus and method capable of reducing a channel switching time in a mobile broadcasting terminal.

According to one aspect of the present invention, there is provided an apparatus for receiving and processing a broadcast signal in a mobile broadcasting terminal. The apparatus includes a preprocessor for receiving a broadcast signal, converting the broadcast signal into a baseband signal, and then performing OFDM demodulation, Viterbi decoding, and convolutional deinterleaving thereon; a first Reed-Solomon (RS) decoder for RS-decoding the signal output from the preprocessor, and outputting a Transport Stream (TS) packet; a checker for checking Cyclic Redundancy Check (CRC) of the TS packet; a datagram extractor for extracting a datagram having a good CRC result; a datagram controller for receiving the datagram having a good CRC result and outputting the received datagram to an application controller; and the application controller for decoding broadcast data using the datagram received from the datagram controller and providing the decoded broadcast data to a user.

According to another aspect of the present invention, there is provided a method for receiving and processing a broadcast signal in a mobile broadcasting terminal. The method includes receiving a broadcast signal, converting the broadcast signal into a baseband signal, and then performing OFDM demodulation, Viterbi decoding, and convolutional deinterleaving thereon; Reed-Solomon (RS)-decoding the preprocessed signal, and outputting a Transport Stream (TS) packet; checking Cyclic Redundancy Check (CRC) of the TS packet; outputting a datagram having a good CRC result; and decoding broadcast data using the received datagram and providing the decoded broadcast data to a user.

According to further anther aspect of the present invention, there is provided a method for receiving and processing a broadcast signal in a mobile broadcasting terminal. The method includes receiving a broadcast signal, converting the broadcast signal into a baseband signal, and then performing OFDM demodulation, Viterbi decoding, and convolutional deinterleaving thereon; Reed-Solomon (RS)-decoding the preprocessed signal and outputting a Transport Stream (TS) packet; checking Cyclic Redundancy Check (CRC) of the TS packet; outputting a datagram having a good CRC result separately; storing erasure information and datagrams based on the CRC result; correcting an error of the datagrams using the CRC result and outputting the datagrams; and decoding broadcast data using the received datagrams and providing the decoded broadcast data to a user.

### BRIEF DESCRIPTION OF THE DRAWINGS

The above and other objects, features and advantages of the present invention will become more apparent from the following detailed description when taken in conjunction with the accompanying drawings in which:
FIG. 1 is a conceptual diagram for a description of a time slicing technique used in a conventional communication system;
FIGs. 2A to 2D are conceptual diagrams for a description of an MPE-FEC frame structure and a method for configuring an MPE-FEC frame;
FIG. 3 is a functional block diagram for MPE-FEC processing in a mobile broadcasting receiver based on the DVB-H standard;
FIG. 4 is a timing diagram for data processing at a mobile broadcasting receiver supporting N parallel services in a DVB-H system;
FIG. 5 is a flow diagram illustrating a general process of receiving a burst signal and performing MPE-FEC processing thereon in a conventional mobile broadcasting receiver;
FIG. 6 is an internal schematic diagram of a data receiver for MPE-FEC in a mobile broadcasting receiver according to an exemplary embodiment of the present invention;
FIGs. 7 and 8 are processing timing diagrams for an MPE-FEC processing scheme applied to a mobile broadcasting terminal according to an exemplary embodiment of the present invention;
FIG. 9 is a flow diagram illustrating MPE-FEC signal processing in a mobile broadcasting terminal according to an exemplary embodiment of the present invention; and
FIG. 10 is a flow diagram illustrating an operation performed in an application controller during MPE-FEC processing in a mobile broadcasting terminal according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

Exemplary embodiments of the present invention will now be described in detail with reference to the annexed drawings. In the following description, a detailed description of known functions and configurations incorporated herein has been omitted for clarity and conciseness.

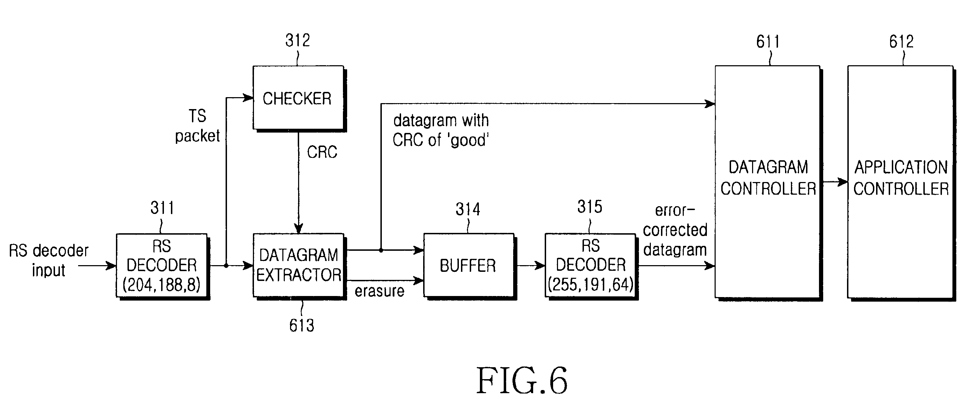

FIG. 6 is an internal schematic diagram of a data receiver for MPE-FEC in a mobile broadcasting receiver according to an exemplary embodiment of the present invention. In FIG. 6 the receiver is equal in structure to the conventional receiver of FIG. 3, and a detailed description of the equal parts will not be given herein.

A datagram extractor 613, unlike a conventional extractor, uses an interface scheme which immediately transmits an IP datagram to an application controller upon detecting that the IP datagram determined that there is no error by detecting a CRC included in a MPE-FEC section as a result of the MPE-FEC processing. However, if it is determined that there is an error in the burst, the datagram extractor 613 acquires error-corrected IP datagrams by performing a MPE-FEC RS decoding process, so as to selectively transmit the parts untransmitted to the AP chip.

A Viterbi decoded signal is input to a RS decoder 311 after undergoing a convolutional deinterleaver (not shown), and converted into a TS packet therein. As described in FIG. 3, the process of OFDM demodulation, Viterbi decoding, and convolutional deinterleaving is called a "preprocessing process." The TS packet is input to a checker 312 and the datagram extractor 613. Then the checker 312 receives TS packets, detects sections of them, and performs CRC check thereon, thereby verifying reliability of IP datagrams which are payloads in the sections. The datagram extractor 613, before it stores the IP datagram reliability-verified by the CRC check in a buffer 314 which stores the MPE-FEC data, transmits the IP datagram to an application controller 612 via a datagram controller 611, thereby removing an unnecessary waiting time and reducing a processing time. In addition, in order to correct an error of an error-included section by the CRC, the datagram extractor 613 stores the MPE-FEC data in the buffer 314 for storing the MPE-FEC data, so that the IP datagram part of the error-included section undergoes error or erasure processing by the CRC. Thereafter, a datagram including an error, as a result of CRC check in one burst, is error-corrected by a MPE-FEC RS decoder 315, and then delivered to the application controller 612 via the datagram controller 611.

The datagram controller 611 selects datagrams to be transmitted to the application controller 612. The datagram controller 611 first transmits IP datagrams with the CRC='good' among the datagrams to be transmitted from the datagram extractor 613 to the application controller 612, and for an IP datagram part with CRC='bad', the datagram controller 611 receives the output of the MPE-FEC RS decoder 315 and transmits it to the application controller 612. If one datagram is divided into several sections during its transmission, the datagram controller 611 transmits the sections to the application controller 612 in units of datagrams using a section number "section_number" and a last section number "last_section_number" included in a MPE section header. Herein, because the last section number means the number of sections constituting one datagram and the section number means a position of a received section in the datagram, it is possible to find out the datagram from the section using the section number and the last section number. Therefore, if there is an error-included ("CRC=bad") section among the sections constituting one datagram as a result of the CRC check, the datagram controller 611 transmits the datagram to the application controller 612 after performing the MPE-FEC decoding thereon using the RS decoder 315, instead of directly transmitting the datagram to the application controller 612.

For example, assume that a burst composed of 10 MPE-FEC sections is received. Also, assume that the MPE-FEC sections are individually allocated numbers 1 to 10 in their received order, and errors have occurred in the 3^{rd} and 7^{th} sections. In this case, the conventional receiver transmits the sections to the application controller of the mobile broadcasting receiver in the following manner.Here, the receiver stores the sections in the buffer 314, which is a MPE-FEC memory, error-corrects the sections using the RS decoder, which is a second decoder, and sequentially transmits the sections with section numbers 1 to 10.

However, the new receiver according to the present invention immediately transmits the CRC='good' sections with section numbers 1, 2, 4, 5, 6, 8, 9 and 10 to the application controller, upon detecting them. The receiver transmits the 3^{rd} and 7^{th} error correction-required sections to the application controller 612 after error correction using the RS decoder 315. Therefore, as the signal quality is higher, the amount of data immediately transmitted to the application controller 612 after being decoded in the first RS decoder 311 in the baseband channel chip increases, thereby contributing to a reduction in the time required for transmitting all datagrams to the application controller 612.

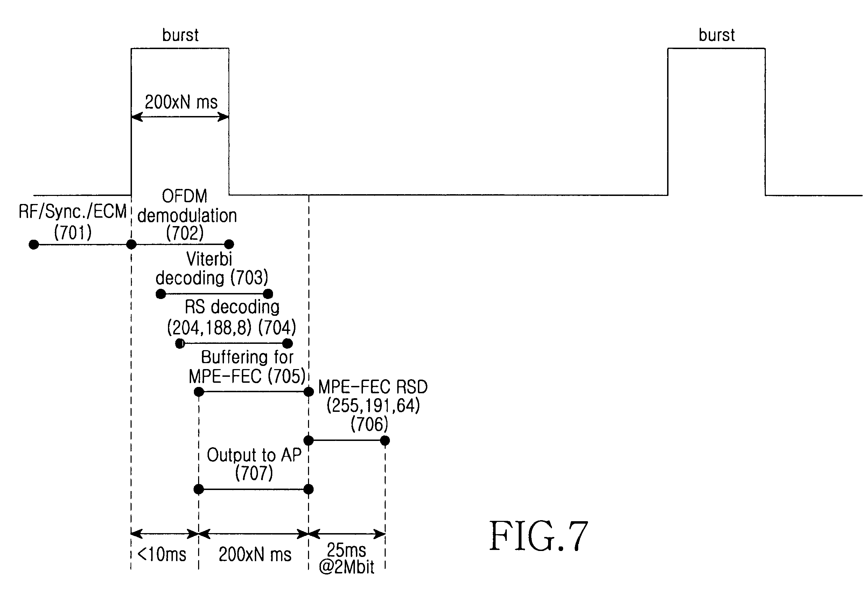

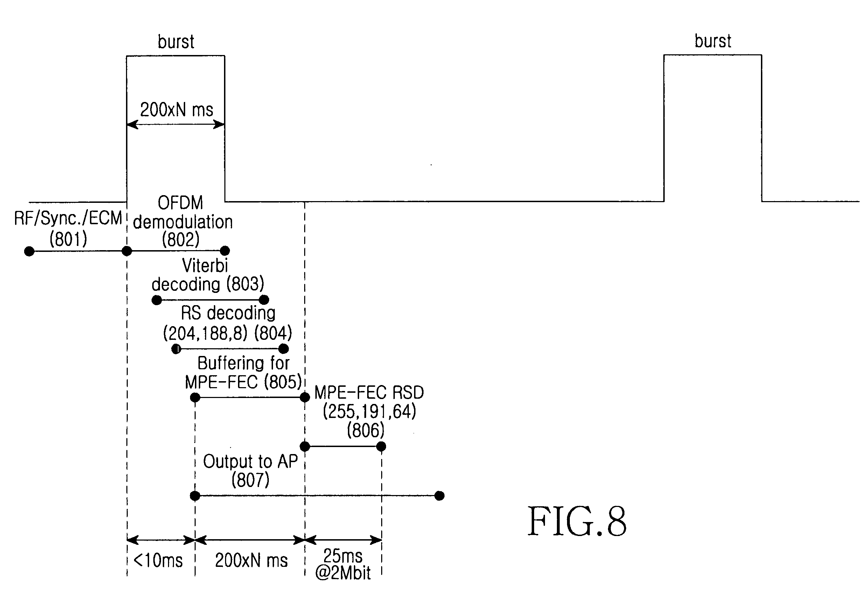

FIGs. 7 and 8 show two processing timing diagrams for a MPE-FEC processing scheme applied to a mobile broadcasting terminal according to an exemplary embodiment of the present invention. FIG. 7 illustrates a timing diagram for a CRC='good' channel environment and, conversely, FIG. 8 illustrates a timing diagram for a CRC='bad' channel environment.

In duration 701, as described above and illustrated in FIG. 7, the receiver converts an RF signal into a baseband signal and performs an OFDM synchronization process thereon before the burst, in order to receive one burst. In a DVB-H system supporting CA, the receiver should receive an Entitlement Control Message (ECM) before the burst. Therefore, at time 701, the receiver receives an RF signal, performs an OFDM synchronization process thereon, and receives and decodes an ECM for Conditional Access.

The receiver receives data transmitted in the burst and performs OFDM modulation thereon in duration 702, performs Viterbi decoding in duration 703, and performs an RS decoding process in duration 704. The time required for this is approximately 10 ms. However, because the new receiver outputs the datagram to the application controller 612 for the CRC='good' data, data is output in duration 707. In addition, because there is no CRC error in FIG. 7, datagrams are directly input to the application controller without being stored in the buffer. Therefore, the duration 707 and the duration 705 are the same time duration. If, however, there is a CRC error, the datagrams should undergo MPE-FEC decoding in duration 706. Here, because it is assumed in FIG. 7 that there is no error, the receiver, upon expiration of the duration 707, can immediately perform audio/video decoding in the application controller 612 without MPE-FEC decoding in the duration 706, thereby providing the service.

Therefore, the new receiver in the present invention, compared with the conventional receiver, rapidly delivers the datagrams to the application processor 612, thereby reducing the total processing time. Particularly, in the good-channel environment where a signal-to-noise ratio (SNR) is high, if the CRC check result is 'good' in all sections as shown in FIG. 7, the datagrams detected in all sections output from the first RS decoder 311 are delivered to the application controller 612 in their received order, so there is no need to activate the second RS decoder 315. Therefore, in the conventionally required delay time of "200 x N + 25" ms except for the 10-ms processing time required until section detection, the 25-ms time for MPE-FEC decoding is not required, and if the CRC check result is 'good' after completion of the CRC check in 1-burst duration, the receiver immediately transmits datagrams increasing the data processing time, thereby contributing to a noticeable reduction in the channel switching time. In particular, as the number N of parallel services increases, the reduction effect of the processing time increases, thereby further increasing the reduction effect of the channel switching time.

For example, assuming that the receiver supports five (5) parallel services per burst, the use of the existing MPE-FEC processing method causes a delay time of about 1 second, but the proposed MPE-FEC processing method in the present invention decreases by about 1 second the channel switching time because it does not need the delay time in the good-channel environment.

FIG. 8illustrates the case where the SNR is low (i.e. the number of CRC='bad' sections increases.).

Duration 801 of FIG. 8 is equal to the duration 701 of FIG. 7, duration 802 is equal to the duration 702, duration 803 is equal to the duration 703, and duration 804 is equal to the duration 704. However, because there are the CRC='bad' sections according to the CRC check result, the receiver should store the CRC='bad' sections and the CRC='good' sections in the buffer 314, perform an error correction on the stored sections, and then output the resulting sections to the application controller 612. Therefore, the time 807 required for the outputting datagrams to the application controller 612 is longer than that of FIG. 7.For example, if the channel condition is poor, the amount of error-corrected datagrams increases. The present invention provides two processing methods for the case where there are the CRC='bad' sections. One method delivers only the CRC='good' sections to the application controller 612 and performs the A/V MPEG decoding thereon. Another method delivers the CRC='good' sections and the error-corrected datagrams to the application controller 612 and performs the A/V MPEG decoding thereon. In the former method, because it delivers only the CRC='good' sections to the application controller 612, as the SNR is lower, the number of sections delivered to the application controller 612 decreases, causing a reduction in performance after MPEG decoding. Therefore, this method may suffer from image degradation, but can contribute to a reduction in the channel switching time. However, the latter method can improve the A/V MPEG decoding performance even in the low-SNR environment, because error-corrected datagrams are delivered to the application controller 612 in the baseband channel chip after the CRC='good' sections are first delivered to the application controller 612.

For example, FIG. 8 shows the second exemplary method which can facilitate improvement in the image quality, but increases in the channel switching time compared with the former method. However, compared with the conventional method, this method has the same image quality but can advantageously reduce the channel switching time. In addition, the new method has a sufficient processing time for data transmission to the chip constituting the application controller 612, thereby reducing the operation speed and thus reducing power consumption. In particular, the new method increases the reduction effect of the channel switching time, as the SNR is higher and the number of parallel services is greater.

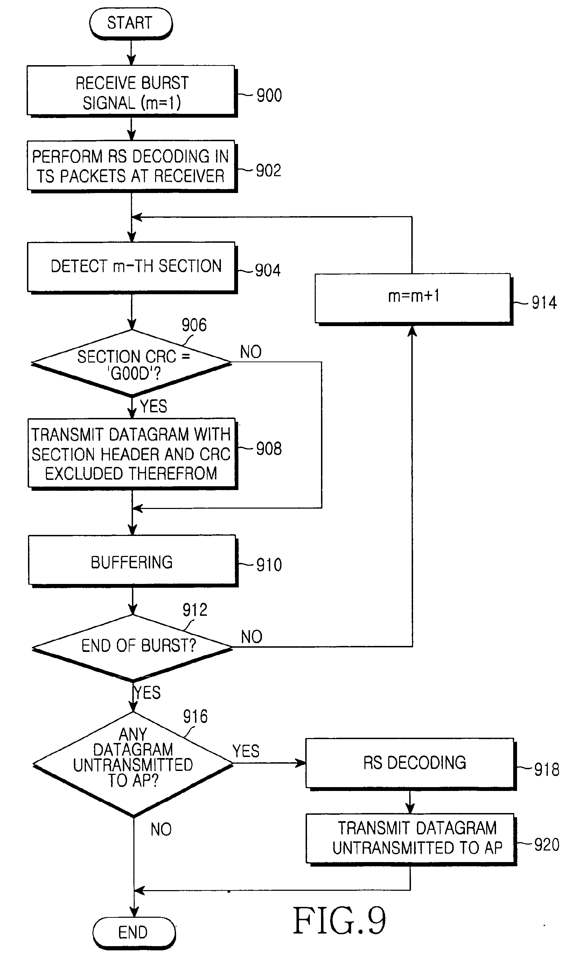

FIG. 9 is a flow diagram illustrating MPE-FEC signal processing in a mobile broadcasting terminal according to an exemplary embodiment of the present invention.

An RF unit (not shown) of a receiver receives a burst signal in step 900, wherein m is set to 1 (m=1). Thereafter, an RS decoder 311 of the receiver performs the RS decoding in units of TS packets in step 902. In step 904, a checker 312 of the receiver detects a m^{th} section, checks the CRC thereof, and outputs the CRC result. Based on the CRC check result on the detected m^{th} section, received from the checker 312, a datagram extractor 613 of the receiver determines in step 906 whether the CRC check result of the section is 'good'. If it is determined that the CRC check result is not 'good', the datagram extractor 613 proceeds to step 910. Otherwise, the datagram extractor 613 proceeds to step 908. In step 908, the datagram extractor 613 of the receiver transmits a datagram with a section header and CRC excluded therefrom to an application controller 612 via a datagram controller 611. However, when the datagram extractor 613 proceeds to step 910 because the CRC check result is not 'good', the datagram extractor 613 buffers the datagrams in a buffer 314. Thereafter, the datagram extractor 613 of the receiver determines in step 912 whether the current section is at the end of the burst. If it is determined that the current section is at the end of the burst, i.e. if the current section is an end of the data transmitted by the time slicing technique as described in FIG. 1, the datagram extractor 613 proceeds to step 916. Otherwise, the datagram extractor 613 proceeds to step 914 where it increases the value m by 1 and then repeats the above process from step 904.

After proceeding to step 916, the datagram controller 611 determines whether there is any datagram untransmitted to the application controller 612, by checking section numbers. If it is determined that there is an untransmitted datagram(s), i.e. if there is data to be decoded by a RS decoder 315 as there is a CRC='bad' section, the datagram controller 611 error-corrects the CRC='bad' datagram using the RS decoder 315 in step 918, and transmits the untransmitted datagram to the application controller 612 in step 920. However, there is no datagram untransmitted to the application controller 612, the application controller 612 ends the routine and waits for the next burst.

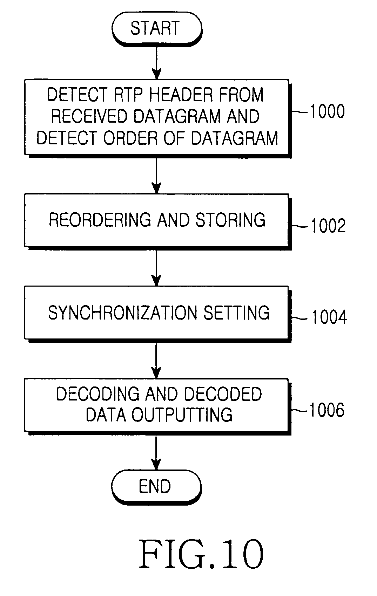

The MPE-FEC processing scheme of the present invention, unlike the conventional scheme of delivering sections in their received order, preferentially delivers a datagram of a CRC='good' section to the application controller 612. Therefore, for the datagrams delivered to the application controller 612, there is a need for an additional process of reordering the datagrams. A description thereof will be made below with reference to FIG. 10.

In an upper layer signal processing process, the application controller 612 performs reordering in one datagram taking the order of data included in a Realtime Transport Protocol (RTP) header. Therefore, the application controller 612 has no additional load, even though the proposed MPE-FEC scheme is applied thereto. In particular, because the application controller 612 has a processing delay time that should be secured for synchronization datagrams through which audio and video are transmitted, it is possible to prevent an additional processing delay time by performing the reordering for the time.

FIG. 10 is a flow diagram illustrating an operation performed in an application controller during MPE-FEC processing in a mobile broadcasting terminal according to an exemplary embodiment of the present invention.

In step 1000, an application controller 612 detects an RTP header from a received datagram and detects order of the datagram. Thereafter, in step 1002, the application controller 612 reorders the datagrams accorder to their orders and stores the reordered datagrams. Because this process is performed depending on the RTP headers, the application controller 612 has no additional processing delay time and/or no additional load as described above. In step 1004, the application controller 612 sets synchronization. The synchronization setting process matches synchronizations of audio and video data. In step 1006, the application controller 612 performs MPEG decoding and outputs the decoded data to a corresponding output unit. That is, as for an audio signal, the application controller 612 outputs the audio signal through a speaker (not shown), and as for a video signal, the application controller 612 outputs the video signal through a display device (not shown) such as a monitor or a Liquid Crystal Display (LCD).

Because the reordering process performed in the application controller 612 is for reordering orders of the error-corrected datagrams, the amount of the error-corrected datagrams noticeably decreases in the higher-SNR environment, thus reducing the amount of datagrams to be reordered.

As can be understood from the foregoing description, the use of the new MPE-FEC processing scheme in the present invention can reduce the channel switching time at the DVB-H receiver. In particular, the reduction effect of the channel switching time increases, as the SNR is higher and as the number of parallel services is greater. In addition, the number of required calculations decreases in a higher-SNR environment, contributing to a decrease in power consumption of the channel chip. Furthermore, as the proposed adaptive processing technique uses a distributed processing scheme for preferentially transmitting the CRC='good' sections to the application controller, it has a sufficient data processing time, thereby reducing the operation speed and thus reducing power consumption. In addition, the proposed method is equal to the existing method in terms of the demodulation performance, while reducing the channel switching time and the power consumption.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An apparatus for receiving and processing a broadcast signal in a mobile broadcasting terminal, the apparatus comprising:
a preprocessor for receiving a broadcast signal, converting the broadcast signal into a baseband signal, and then performing OFDM demodulation, Viterbi decoding, and convolutional deinterleaving thereon;
a first Reed-Solomon (RS) decoder for RS-decoding the signal output from the preprocessor and outputting a Transport Stream (TS) packet;
a checker for checking a Cyclic Redundancy Check (CRC) of the TS packet;
a datagram extractor for extracting a datagram having a good CRC result;
a datagram controller for receiving the datagram having a good CRC result and outputting the received datagram to an application controller; and
the application controller for decoding broadcast data using the datagram received from the datagram controller and providing the decoded broadcast data to a user.

2. The apparatus of claim 1, wherein the datagram extractor further outputs erasure information and datagram based on the CRC result;
wherein the apparatus further comprises:
a buffer for storing the erasure information and datagram received from the datagram extractor; and
a second RS decoder for correcting an error of an erasure datagram using the erasure information and datagram stored in the buffer.

3. The apparatus of claim 2, wherein the datagram controller receives the error-corrected datagram and outputs the received datagram to the application controller.

4. The apparatus of claim 3, wherein the application controller reorders and decodes the received datagrams.

5. The apparatus of claim 4, wherein the datagrams are reordered using Realtime Transport Protocol (RTP) headers.

6. A method for receiving and processing a broadcast signal in a mobile broadcasting terminal, the method comprising:
receiving a broadcast signal, converting the broadcast signal into a baseband signal, and then performing OFDM demodulation, Viterbi decoding, and convolutional deinterleaving thereon;
Reed-Solomon (RS)-decoding the preprocessed signal and outputting a Transport Stream (TS) packet;
checking Cyclic Redundancy Check (CRC) of the TS packet;
outputting a datagram having a good CRC result; and
decoding broadcast data using the received datagram and providing the decoded broadcast data to a user.

7. A method for receiving and processing a broadcast signal in a mobile broadcasting terminal, the method comprising:
receiving a broadcast signal, converting the broadcast signal into a baseband signal, and then performing OFDM demodulation, Viterbi decoding, and convolutional deinterleaving thereon;
Reed-Solomon (RS)-decoding the preprocessed signal and outputting a Transport Stream (TS) packet;
checking Cyclic Redundancy Check (CRC) of the TS packet;
outputting a datagram having a good CRC result separately;
storing erasure information and datagrams based on the CRC result;
correcting an error of the datagrams using the CRC result and outputting the datagrams; and
decoding broadcast data using the received datagrams and providing the decoded broadcast data to a user.

8. The method of claim 7, wherein the outputting of the datagrams comprises outputting error-corrected datagrams.

9. The method of claim 7, wherein the decoding of broadcast data comprises reordering and decoding the received datagrams.

10. The method of claim 9, wherein the datagrams are reordered using Realtime Transport Protocol (RTP) headers.
